# EUROPEAN PATENT APPLICATION

(11) **EP 1 982 832 A2**
(43) Date of publication of application: **22.10.2008**
(21) Application number: 08004645.1
(22) Date of filing: 13.03.2008
(51) Int. Cl.: B32B 21/14, B32B 21/08, B32B 7/12, E04F 15/02

(54) **Compound flooring and manufacturing method**

(30) Priority: 20.04.2007 CN 200710027633
(71) Applicant: Wu, Tanbo, Yonghe Economic Zone Getdd. (CN)
(72) Inventor: Wu, Tanbo, Yonghe Economic Zone Getdd. (CN)
(74) Representative: Banzer, Hans-Jörg

(57) **Abstract**

The present invention relates to a compound flooring material. The compound flooring such as thermoplastic/wood compound flooring is produced by adhering two layers through adhesive cementing. According to an embodiment, a first sheet is a high quality wood veneer and the second sheet is a low foaming, environment friendly, UPVC board. The sheets are bonded by incorporating a high quality polyvinyl acetate polymer adhesive that contains no formaldehyde, thus providing a strong, safe, odorless product. The UPVC/wood compound flooring has a very low shrinking and swelling rate and is convenient and accurate to install.

## Description

### BACKGROUND OF THE INVENTION

### 1. Field of the Invention

The present invention relates to thermoplastic compound flooring material. In particular, the present invention is a new UPVC/wood compound flooring material and manufacturing method thereof. The process represents a marked improvement in the manufacturing of compound flooring and the present invention is in many ways superior to previous generations of wood flooring.

### 2. Related Art

The compound floor (flooring material comprising multiple bonded layers of similar or dissimilar materials) has gained widespread acceptance in recent years. There are three basic methods for producing compound floor:

MOLDED FIBRE COMPOSITE COMPOUND FLOOR: Adhesives and additives are blended with wood pulp, then passed through high temperature, high pressure processing to become a solid molded product. This method of manufacturing overcomes the inherent instability of wood by elimination of the grain structure. However, the most commonly used adhesive in this process is formaldehyde, which is difficult to control, and often exceeds established limits in processing. This results in the continued emission of an irritating, and potentially hazardous odor after installation.

SOLID WOOD COMPOUND FLOOR: This method combines staggered layers of solid wood, with the top layer generally being a high quality hardwood, while sub-layers are of lesser quality. Some brands arrange center layers perpendicular to top and bottom layers (plywood technology) to form a more dimensionally stable product, while maintaining the look and feel of traditional solid wood flooring. This product has three general forms:
1) Three layered solid wood compound flooring;
2) Multi-layered solid wood compound flooring; and
3) New type solid wood compounding flooring.

PLASTIC SOLID WOOD COMPOUND FLOOR: This method is a new technology that combines three dissimilar layers to form a flooring material, e.g. as described in Chinese patent application 02210626.X. The top layer is usually a thin panel of high quality wood of various species. The central layer is foamed plastic shock absorbing layer, and the bottom layer is a filled PVC floor. In this type of PVC, sometimes a heavy metal like lead is used as a process aid. In such circumstances, the flooring could create a potentially hazardous product which would be illegal in many countries.

### SUMMARY OF THE INVENTION

The object of the present invention is to provide a much-improved process for the manufacture of a highly desirable compound flooring comprising an unplasticised polyvinyl chloride (UPVC) and solid wood flooring product. According to the present invention, a compound flooring as defined in claim 1 and a method of manufacturing a compound flooring as defined in claim 11 or claim 17 is provided. The dependent claims define preferred embodiments of the invention. Much simpler than previous methods, an embodiment of the present invention incorporates two layers, and in an embodiment, only two layers comprising: a thin top layer or sheet (1) of high quality wood of any species, and a bottom layer (2) of environment friendly, low foaming thermoplastic board such as a UPVC layer. The foamed bottom has excellent shock absorbing properties that negate the need for a third shock-absorbing layer.

The UPVC layer is processed without use of any heavy metal processing aids and is therefore an environmentally safe product. The use of a UPVC layer adds excellent dimensional stability (coefficient of expansion and contraction is very low, preventing curling and warping), efficient insulation against heat/cold, sound deadening, moisture resistance, insect resistance, and fire suppression (PVC tends to be self-extinguishing). It also allows for easy and accurate installation.

Additionally, this compound flooring of the present invention allows for an 86% saving of the high quality wood used in traditional solid wood flooring, while maintaining the exact appearance of the solid wood floor, and at the same time being more durable and more comfortable underfoot.

According to an embodiment of the present invention, the UPVC/solid wood compound flooring is produced by adhering a first layer comprising a high quality wood veneer top layer to a second layer comprising a low foaming UPVC board which serves as a support, and shock absorbing layer. The first and second layers are bonded, incorporating a high quality polyvinyl acetate polymer adhesive, which contains no formaldehyde, thus providing a strong, safe, permanent, and odorless bonded product.

According to an embodiment of the present invention, the chemical make-up of the second layer comprises: PVC of 60-90 weight share, CaCO3 of 5-20 weights shares, organic tin of 0-4 weight share and/or rare earth Ca-Zn composite stabilizer (La/Ca/Zn) of 1-5 weight share, Methyl Methacrylate-Butyl Acrylic-Butyl Methacrylate ternary copolymer of 5-12 weight share, PE wax of 0.1-1 weight share, stearic acid of 0.1-1 weight share, heavy metal (i.e. lead, cadmium) of less than 200ppm. The second layer of the compound flooring according to an embodiment of the invention has the following content of inorganic elements with Atomic Emission Spectrometry: Ca>1, Zn> 1, La> 0.1-0.01 and/or Sn is 0.1-0.01, Al is 0.1-0.01.

These and other embodiments of the present invention are further made apparent, in the remainder of the present document, to those of ordinary skill in the art.

### BRIEF DESCRIPTION OF THE DRAWINGS

In order to more fully describe embodiments of the present invention, reference is made to the accompanying drawings. These drawings are not to be considered limitations in the scope of the invention, but are merely illustrative.

**FIG. 1** is a schematic view of a tongue and groove option for installing low foaming UPVC/wood compound flooring, according to an embodiment of the present invention.

**FIG. 2** illustrates an alignment pin and recessed pocket option for installing low foaming UPVC/wood compound flooring, according to an embodiment of the present invention.

### DETAILED DESCRIPTION OF SPECIFIC EMBODIMENTS

The description above and below and the drawings of the present document focus on one or more currently preferred embodiments of the present invention and also describe some exemplary optional features and/or alternative embodiments. The description and drawings are for the purpose of illustration and not limitation. Those of ordinary skill in the art would recognize variations, modifications, and alternatives. Such variations, modifications, and alternatives are also within the scope of the present invention. Section titles are terse and are for convenience only.

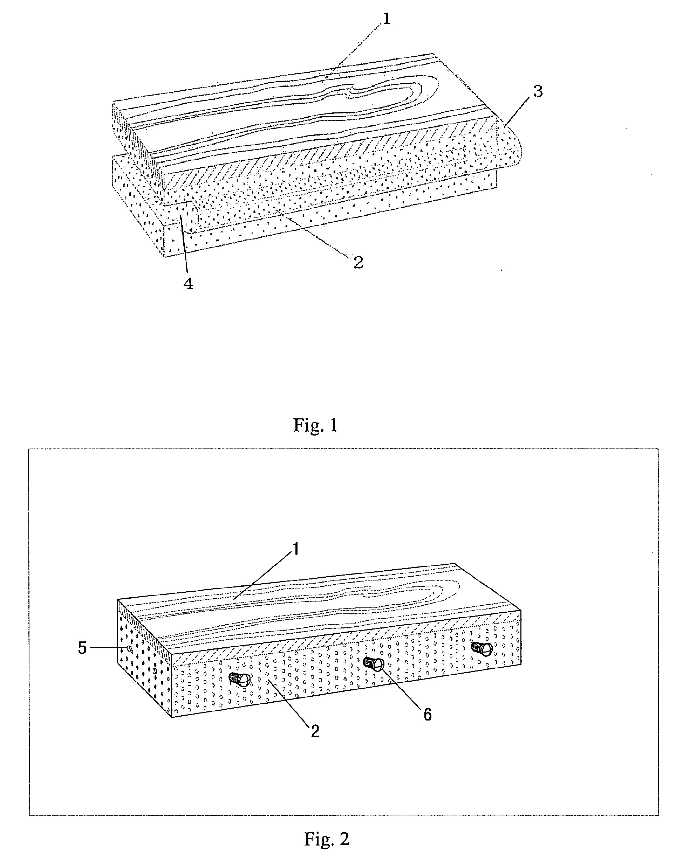

**FIG. 1** shows a thermoplastic/solid wood compound flooring according to an embodiment of the present invention. The manufacture of the compound flooring comprises a first layer 1 of material adhesive bonded to a second layer 2 of different material. In particular, the first layer 1 comprises a high quality and thin wood veneer, and the second layer 2 comprises a low foaming Unplasticised Polyvinyl Chloride (UPVC) board, according to an embodiment of the present invention. The second layer 2 serves as the support and shock-absorption layer. The two layers are bonded by incorporating a high quality polyvinyl acetate polymer adhesive, which contains no formaldehyde, thus providing a strong, safe, permanent, and odorless bonded product. **FIG. 1** also depicts a tongue 3 and groove 4 method of installation for this product. This is only one of the numerous possible options for installing the compound flooring product according to the present invention.

**FIG. 2** shows the low foaming UPVC/Wood flooring made by the adhesive bonding of two panels. First layer 1 is a thin wood veneer, and second layer 2 is a low foaming UPVC board. **FIG. 2** also depicts an alignment pin 6 and recessed pocket 5 method of installation. This is only one of numerous possible options for installing the compound flooring product according to the present invention.

As discussed, while first layer 1 is a high quality wood veneer, the chemical makeup of second layer 2 comprises a number of materials. The second layer 2 is a thermoplastic such as UPVC board, having a chemical makeup comprising: PVC of 60-90 weight share, CaCO3 of 5-20 weights share, organic tin of 0-4 weight share and/or earth Ca-Zn composite stabilizer (La/Ca/Zn) of 1-5 weight share, Methyl Methacrylate-Butyl Acrylic-Butyl Methacrylate ternary copolymer of 5-12 weight share, PE wax of 0.1-1 weight share, stearic acid of 0.1-1 weight share, while heavy metal (lead, cadmium) is less than 200ppm. Under an Atomic Emission Spectrometer, the UPVC board has the following content of inorganic elements: Ca>1, Zn> 1, La> 0.1-0.01 and/or Sn is 0.1-0.01, A1 is 0.1-0.01.

### Production method for low foaming UPVC/Wood flooring

Layer 1: First layer 1 comprises of high quality wood veneer with a thickness varying from 0.5 to 5 mm, depending on lumber species, and/or the choice of the manufacturer.

TECHNICAL PROCEDURE: Selected lumber is sawed to a general size, steam degreased, and kiln dried until moisture content reaches about 7-9%. Dried lumber is then transferred to a climate-controlled chamber for 7-10 days in a temperature of 20°C to 35°C, and humidity of 35-40%. This is a balancing and tempering procedure, necessary to stabilize the panels, and relieve internal stress developed in kiln drying operation. Panels are then cut to specific size, and the surface planed on all four sides. Then a quality control operation is applied to select color, grain patterns, etc.

Layer 2: Second layer 2 is an extruded low foaming PVC board with a general thickness of 6-13mm.

The material composition and procedure for second panel 2 is described in the following distribution ratio: PVC dosage is 65-125 weight share, CaCO3 dosage is 3-30 weight share, Methyl Methacrylate-Butyl Acrylic-Butyl Methacrylate Ternary copolymer (or i.e. foam regulator) dosage is 3.5-21 weights share, vesicant dosage is 0.5-2.0 weight share, organic tin dosage is 0-4.0 weight share and/or the rare earth Ca-Zn composite stabilizer dosage is 3.0-8.75 weight share, PE wax dosage is 0.2-1.0 weight share, saturated fatty acid ester dosage is 0.1-0.5 weight share, stearic acid dosage is 0.1-1.0 weight share, monoglycerides dosage is 0.1-0.5 weight share, epoxy soybean oil (ESO) dosage is 0-6.5 weight share, processing additives such as acrylic resin (ACR) dosage is 0-4.0 weight share, chlorination polyethylene (CPE) dosage is 0-6.0 weight share, titanium dioxide (TiO2) dosage is 0-5.0 weight share.

TECHNICAL PROCEDURE: After careful measurement of all proportions, components are introduced into a high-speed chemical blender, and mixed for 8-15 minutes. This material is then transferred to a low speed blender, where it is stirred for 5-15 minutes more. This material is next allowed to "Rest" for 24 hours; after which it is fed into a twin-screw extrusion line and processed to become the low foaming PVC board known as second layer 2. The extruder temperature parameters are as follows: screw at 140±5C; tooling at 175±5C; and feed-spout at 180±5C.

Panel Compounding: High quality waterproof polyvinyl acetate adhesive (containing no formaldehyde or triphenyl) is applied to a top surface of low foaming PVC board (second layer 2) at a rate of 200-300g/cubic meter. First layer 1 is joined to second layer 2 in a fixture, then introduced into a heated, high frequency press, where permanent bonding of the two layers/panels is accomplished through thermo compression, thus shaping the semi-finished flooring product. The bonded panels are again tempered in a climate-controlled chamber before proceeding to the next stage.

Intensive Processing: According to the desire/ requirements of the manufacturer, milling is now done to give the flooring its finished shape, including numerous possible configurations for installation apparatus (tongue and groove, etc).

Surface Finishing and Processing: At this stage, flooring is complete except for sanding, and application of a tough, durable wood finish.

### EXAMPLE 1

In one embodiment of the present invention, the method of production of the compound flooring is as follows: Take 2m³ nanmu and place into a drying kiln for drying. The selected wood of required specification is added into the drying kiln for steam degreasing. The drying kiln serves to help eliminate internal stress and reduce physiological water. To reach 7.5% of the moisture content of nanmu, quench and temper it in a balanced storehouse. Store for 10 days at 20-35°C under 35-40% humidity. Then process the wood into a solid sheet for standby according to a thickness of 0.5mm. For instance, the wood is sawed into pieces with a thickness of 0.5mm.

Weigh out PVC 65kg, CaCO3 6kg, Methyl Methacrylate-Butyl Acrylic-Butyl Methacrylate Ternary copolymer 8kg, Azodicarbonamide vesicant 0.8kg, Organic tin 1.2kg, rare earth Ca-Zn composite stabilizer 3.0kg, PE wax 0.2kg, stearic acid (HST) 0.2kg, monoglycerides 0.1kg, saturated fatty acid ester 0.1 kg, ESO 2.0kg, ACR 2.0 kg, TiO2 2.0 kg. Add these components into a high-speed churn-dasher with high speed mixing for 10 minutes and then remove the materials (temperature is maintained between 115-120°C). Place the materials into a low speed churn-dasher to stir for 15 minutes, and remove. Shift the blended material into the store tank to deposit for 24 hours. Then add the material to a PVC plate double screw rod for extrusion to produce a low foaming UPVC board 2.

The double screw extrusion process temperature of PVC sheet is set as follows: screw temperature is 145°C, mold temperature is set at 175±5°C, and a barrel temperature in areas no. 1 through no. 5 area is all 180±5°C. Place the low foaming UPVC board 2 for standby at normal temperature.

First, the low foaming UPVC board 2 is provided with 220g polyvinyl acetate polymer adhesive to each square meter. The board 2 is glued to form the flan with the nanmu faceplate of the same area, and the thickness of the nanmu faceplate is 0.5mm. Third, the board 2 is exposed to a high frequency hot press for processing of high-frequency hot molding. Fourth, the tenon and groove structure is formed on the low foaming UPVC board 2 according to dimensions. Then, paint is applied to the bottom and to the surface, and light processing is applied to arrive at a finished product.

### EXAMPLE 2

In another embodiment of the present invention, the method of production of the compound flooring is as follows: Take 2m³ nanmu, and place it into a drying kiln for drying. The selected wood of required specification is added into the drying kiln for steam degreasing. The drying kiln helps eliminate internal stress and reduce physiological water. To reach 7.5% of the moisture content of nanmu, quench and temper in a balanced storehouse. Store for 10 days at 20-35°C under 35-40% humidity. Then process the wood into a solid sheet for standby according to a thickness of 3mm. For instance, the wood is sawed into pieces with a thickness of 3mm.

Weigh out PVC (K=56) 100kg, CaCO3 20kg, Methyl Methacrylate-Butyl Acrylic-Butyl Methacrylate Ternary copolymer 18kg, azodicarbonamide vesicant 1.8 kg, organic tin 3.5kg, PE wax 1.0kg, monoglycerides 0.6kg, stearic acid (HST) 0.3kg, saturated fatty acid ester 0.3 kg, ESO 4.0kg, CPE 4.0 kg. Add these components into a high-speed churn-dasher with high speed mixing for 10 minutes and then remove the materials (temperature is maintained between 115-120°C). Place the materials into a low speed churn-dasher to stir for 15 minutes and then remove. Shift the blended material in a store tank to deposit for 24 hours and add the material to a PVC plate double screw rod for extrusion to produce low foaming UPVC board 2.

The double screw extrusion process temperature of PVC sheet is set as follows: screw temperature is 145°C, mold temperature set at 175±5°C, and a barrel temperature in areas no. 1 through no. 5 is all 180±5°C. Produce the low foaming UPVC board 2 and place for standby at normal temperature.

First, the low foaming UPVC board 2 is provided with 280g polyvinyl acetate polymer adhesive to each square meter. The board 2 is glued to form the flan with the nanmu faceplate of the same area, and the thickness of the nanmu faceplate is 3mm. Third, the board is exposed to high frequency hot press for processing of high-frequency hot molding. Fourth, the tenon and groove structure or the recessed pocket and pin structure is formed on the low foaming UPVC board 2 according to dimensions. Then, paint is applied to the bottom and to the surface, and light processing is applied to arrive at a finished product.

### EXAMPLE 3

In another embodiment of the present invention, the method of production of the compound flooring is as follows: Take 2m³ rosewood and place into a drying kiln for drying. The selected wood of required specification is added into the drying kiln for steam degreasing. The drying kiln helps eliminate internal stress and reduce physiological water. To reach 8% of the moisture content in the rosewood, quench and temper it in a balanced storehouse. Store for 10 days at 20-35°C under 35-40% humidity. Then process the wood into a solid sheet for standby according to a thickness of 0.5mm for sawing patch. For instance, the wood is sawed into pieces with a thickness of 3mm.

Weigh out PVC (K=56) 125kg, CaCO3 30kg, Methyl Methacrylate-Butyl Acrylic-Butyl Methacrylate Ternary copolymer 21kg, NaHCO3 modified vesicant 2.0kg, rare earth Ca-Zn composite stabilizer 8.75 kg, PE wax 1.0kg, stearic acid (HST) 0.2kg, saturated fatty acid ester 0.4kg, ESO 5.0kg, ACR 2.0 kg, TiO2 3.0 kg. Add these components into a high-speed churn-dasher with high speed mixing for 10 minutes and then remove the materials (temperature is maintained between 115-120°C). Place the materials into a low speed churn-dasher to stir for 15 minutes, and then remove. Shift the blended materials into a store tank to deposit for 24 hours, and then add the material to a PVC plate double screw rod for extrusion to produce low foaming UPVC board 2.

The double screw extrusion process temperature of PVC sheet is set as follows: screw temperature is 145°C, mold temperature is set at 175±5°C, and a barrel temperature in areas no. 1 through no. 5 is all 180±5°C. Place the low foaming UPVC board for standby at normal temperature.

First the low foaming UPVC board 2 is provided with 260g polyvinyl acetate polymer adhesive to each square meter. The board 2 is glued to form the flan with the rosewood faceplate of the same area, and the thickness of the rosewood faceplate is 5mm. Third, the board is exposed to a high frequency hot press for processing of high-frequency hot molding. Fourth, the tenon and groove structure or hollowness and convex nails structure is opened on the low foaming UPVC board 2 according to dimensions. Then, paint is applied to the bottom and to the surface, and light processing is done to arrive at a finished product.

Using methods of gas chromatography in conjunction with mass spectrometry, mass spectrometry, infrared spectroscopy, X-ray diffraction etc., the material componential content of the second layer 2 of the compound flooring according to an embodiment, is detected as follows: PVC is 60-90 weight share, CaCO3 is 5-20 weights share, organic tin is 0-4 weight share or/and rare earth Ca-Zn composite stabilizer (La/Ca/Zn) is 1-5 weight share, Methyl Methacrylate-Butyl Acrylic-Butyl Methacrylate ternary copolymer is 5-12 weight share, PE wax is 0.1-1 weight share, stearic acid is 0.1-1 weight share, heavy metal (lead, cadmium) is less than 200ppm. In addition, the second layer 2 of the solid wood/UPVC synthetic flooring of the present invention has been analyzed to have the following content of inorganic elements with Atomic Emission Spectrometry: Ca>1, Zn> 1, La> 0.1-0.01 and/or Sn is 0.1-0.01, A1 is 0.1-0.01.

The UPVC/wood compound flooring according to embodiments of this invention only uses about 14% of the wood found in pure natural wood flooring and maintains the same grade and quality as a high quality solid wood flooring. In addition, the manufacturing cost for the compound flooring is 40% less than the manufacturing cost for solid wood flooring.

Throughout the description and drawings, example embodiments are given with reference to specific configurations. It will be appreciated by those of ordinary skill in the art that the present invention can be embodied in other specific forms. Those of ordinary skill in the art would be able to practice such other embodiments without undue experimentation. The scope of the present invention, for the purpose of the present patent document, is not limited merely to the specific example embodiments of the foregoing description, but rather is indicated by the appended claims. All changes that come within the meaning and range of equivalents within the claims are intended to be considered as being embraced within the spirit and scope of the claims.

## Claims

1. A compound flooring comprising a top layer (1) of wood adhered to a bottom layer (2) of low foaming UPVC with a polymer adhesive.

2. The compound flooring of claim 1, wherein the thickness of said top layer (1) ranges from about 0.5 to about 5 mm.

3. The compound flooring of claim 1 or claim 2, wherein the thickness of the bottom layer (2) ranges from about 6 to about 13 mm.

4. The compound flooring of any one of claims 1-3, wherein the UPVC comprises a rare earth Ca-Zn composite stabilizer.

5. The compound flooring of any one of claims 1-4, wherein the bottom layer (2) comprises the following raw composition and raw material ratio:
a PVC dosage between 65 to 125 weight ratio;
a CaCo3 dosage between 3 to 30 weight ratio;
a Methyl Methacrylate-Butyl Acrylic-Butyl Methacrylate Ternary copolymer dosage between 3.2 to 21 weight share;
an organic tin dosage between 0 to 4.0 weight share, or a rare earth Ca-Zn composite stabilizer dosage between 3 to 8.75 weight share;
a PE wax dosage between 0.2 to 1.0 weight share;
a saturated fatty acid ester dosage between 0.1 to 0.5 weight share;
a stearic acid dosage between 0.1 to 1.0 weight share;
an epoxy soybean oil (ESO) dosage between 0 to 6.5 weight share;
a processing additives dosage between 0 to 4.0 weight share;
a chlorination polyethylene (CPE) dosage between 0 to 6.0 weight share;
a titanium dioxide (TiO2) dosage between 0 to 5 weight share.

6. The compound flooring of any one of claims 1-5, wherein the bottom layer (2) in a finished state, has less than 200ppm of heavy metal.

7. The compound flooring of any one of claims 1-6, wherein the bottom layer (2) in a finished state, has an inorganic element content of Ca>1, Zn> 1, La> 0.1-0.01 and/or Sn between 0.1-0.01, and Al between 0.1-0.01.

8. The compound flooring of any one of claims 1-7, wherein the polymer adhesive is a high quality, polyvinyl acetate polymer containing no formaldehyde.

9. The compound flooring of any one of claims 1-8, wherein the two layers (1, 2) are adhered together and configured to have a tongue (3) and groove (4) configuration for installation.

10. The compound flooring of any one of claims 1-9, wherein the bottom layer (2) comprises a plurality of recessed pockets (5) to provide for a pin and recessed pocket configuration for installation.

11. A method of manufacturing a compound flooring, the method comprising the steps of:
applying an adhesive to a top surface of a thermoplastic layer (2) of unplasticized polyvinyl chloride (UPVC);
adhering a top layer (1) comprising wood to the top surface of the thermoplastic layer (2);
heating the layers (1, 2) in a high frequency press for permanent bonding; and
tempering the layers (1, 2) in a climate-controlled chamber.

12. The method according to claim 11, wherein the adhesive is a polyvinyl acetate polymer containing no formaldehyde.

13. The method according to claim 11 or claim 12, wherein the adhesive is applied to the thermoplastic layer (2) at a concentration of about 200-300g/cubic meter.

14. The method according to any one of claims 11-13, wherein manufacturing the thermoplastic layer (2) comprises the steps of:
combining raw materials for UPVC and mixing for about 15 minutes at a temperature of about 115-120°C,
low speed mixing for about 15 minutes,
storage of the material for about 24 hours, and
extrusion of the material to produce a low foaming UPVC board.

15. The method according to any one of claims 11-14, wherein the thermoplastic layer (2) is a UPVC comprising:
a PVC of about 65 to 125 kg, CaCO3 of about 6 to 30kg, Methyl Methacrylate-Butyl Acrylic-Butyl Methacrylate Ternary copolymer of about 8 to 21 kg, azodicarbonamide vesicant of about 0.8 to 1.8kg, organic tin of about 1.2 to 3.5kg and/or a rare earth Ca-Zn composite stabilizer of about 3.0 to 8.75 kg, a PE wax of about 1.0 to 0.2kg, stearic acid of about 0.2kg, monoglycerides of about 0.1 to 0.6 kg, a saturated fatty acid ester of about 0.1 to 0.4 kg, an ESO of about 2.0 to 5.0 kg, an ACR of about 2.0 kg, and TiO2 of about 2.0 to 3.0kg.

16. The method of any one of claims 11-15, wherein the thermoplastic layer (2) in a finished state, has an inorganic element content of Ca>1, Zn> 1, La> 0.1-0.01 and/or Sn between 0.1-0.01, and A1 between 0.1-0.01.

17. A method of manufacturing a compound flooring having a first wood layer (1) and a second thermoplastic layer (2), the method comprising the steps of:
applying a polyvinyl acetate polymer adhesive to a top surface of the thermoplastic layer (2) at a concentration of 200 to 300g/cubic meter;
adhering the first wood layer (1) to the top surface of the thermoplastic layer (2);
heating the layers (1, 2) in a high frequency press for permanent bonding by thermo compression to form the compound flooring;
tempering the compound flooring in a climate-controlled chamber;
milling the compound flooring for a finished shape.

18. The method according to claim 17, wherein the thermoplastic layer (2) is a UPVC comprising: a PVC of about 65 to 125 kg, CaCO3 of about 6 to 30kg, Methyl Methacrylate-Butyl Acrylic-Butyl Methacrylate Ternary copolymer of about 8 to 21 kg, azodicarbonamide vesicant of about 0.8 to 1.8kg, organic tin of about 1.2 to 3.5kg and/or a rare earth Ca-Zn composite stabilizer of about 3.0 to 8.75 kg, a PE wax of about 1.0 to 0.2kg, stearic acid of about 0.2kg, monoglycerides of about 0.1 to 0.6 kg, a saturated fatty acid ester of about 0.1 to 0.4 kg, an ESO of about 2.0 to 5.0 kg, an ACR of about 2.0 kg, and TiO2 of about 2.0 to 3.0kg.
